# EUROPÄISCHE PATENTSCHRIFT

(11) **EP 2 250 053 B1**
(45) Veröffentlichungstag und Bekanntmachung des Hinweises auf die Patenterteilung: **28.09.2011**
(21) Anmeldenummer: 08873184.9
(22) Anmeldetag: 17.11.2008
(51) Int. Cl.: B60S 1/08, B60R 16/03, H02K 11/00

(54) **MOTORSYSTEM MIT SENSOR UND AUSWERTEEINHEIT**
MOTOR SYSTEM WITH SENSOR AND EVALUATION UNIT
SYSTÈME DE MOTEUR AVEC CAPTEUR ET UNITÉ D'ÉVALUATION

(30) Priorität: 04.03.2008 DE 102008000501
(43) Veröffentlichungstag der Anmeldung: 17.11.2010
(73) Patentinhaber: Robert Bosch GmbH, 70442 Stuttgart (DE)
(72) Erfinder: OWERFELDT, Andre, 71706 Markgroeningen (DE)
(86) Internationale Anmeldenummer: PCT/EP2008/065661
(87) Internationale Veröffentlichungsnummer: WO 2009/109245

(56) Entgegenhaltungen:
- EP-A- 1 736 284
- DE-A1- 10 258 753
- DE-A1- 19 842 064
- US-A- 5 780 988
- US-B1- 6 356 044

## Beschreibung

### Technisches Gebiet

Die Erfindung betrifft ein Motorsystem, bei dem Motorparameter wie z.B. Drehwinkel, Drehzahl und dgl. erfasst werden können.

### Stand der Technik

Elektromotoren in Motorsystemen werden in der Regel über geeignete Zuleitungen z.B. von einer Steuereinheit angesteuert. Die Elektromotoren können in vielfältiger Weise als Synchronmotoren, Asynchronmotoren, bürstenlose Motoren beziehungsweise Gleichstrommotoren ausgebildet sein. Die Elektromotoren sind häufig mit einem oder mehreren Sensoren versehen, um einen Lagewinkel bzw. eine Drehzahl oder andere für den Betrieb des elektrischen Motors relevante Informationen, wie z.B. die Temperatur des Elektromotors und dgl. zu erfassen. Die Sensoren sind über Signalleitungen elektrisch mit der Steuereinheit verbunden. Die Steuereinheit übernimmt in der Regel Funktionen der Ansteuerung des Elektromotors mit geeigneten Größen und die Auswertung der von dem Sensor gelieferten Größen.

Ein Nachteil eines solchen Motorsystems ist es, dass die Steuereinheit an unterschiedliche Typen von Elektromotoren entsprechend angepasst werden muss, da diese bspw. mit unterschiedlichen Sensoren oder Sensoreinrichtungen versehen sind, die in der Steuereinheit unterschiedliche Maßnahmen (Hardware) erfordern. Weiterhin ist ein Nachteil bei herkömmlichen Motorsystemen, dass die Übertragungsstrecke zwischen dem Sensor in dem Elektromotor und der Auswertung in der Steuereinheit fehleranfällig und störanfällig ist, z.B., da elektromagnetische Störungen in die Übertragungsleitungen bzw. Ansteuerleitungen für den Elektromotor eingekoppelt werden können, die das auszuwertende Sensorsignal verfälschen. Zur Erhöhung von Zuverlässigkeit und Flexibilität empfehlen die Dokumente US 5780988 und DE 19842064 die Systemintegration durch den Einsatz spezialisierter Module. Es ist daher Aufgabe der vorliegenden Erfindung, ein Motorsystem zur Verfügung zu stellen, das in einfacher Weise an verschiedene Typen von Elektromotoren anpassbar ist und bei dem weiterhin die Anfälligkeit für eine fehlerhafte Erfassung von Sensorgrößen aus dem Elektromotor reduziert ist.

### Offenbarung der Erfindung

Diese Aufgabe wird durch das Motorsystem gemäß Anspruch 1 gelöst.

Weitere vorteilhafte Ausgestaltungen der Erfindung sind in den abhängigen Ansprüchen angegeben.

Gemäß einem Aspekt der Erfindung ist ein Motorsystem vorgesehen. Das Motorsystem umfasst einen Elektromotor, eine Auswerteeinheit, die mit dem Elektromotor gekoppelt ist, um motorrelevante Größen zu erfassen und um abhängig von den motorrelevanten Größen eine Motorinformation bereitzustellen, und eine Steuereinheit, die mit der Auswerteeinheit verbunden ist, um die Motorinformation zu erhalten. Die Auswerteeinheit ist von der Steuereinheit separat ausgeführt.

Das obige Motorsystem umfasst neben der Steuereinheit und dem Elektromotor eine separate, baulich von der Steuereinheit getrennte Auswerteeinheit, die die Erfassung der Sensorwerte aus dem Elektromotor übernimmt und diese in standardisierter Form der Steuereinheit bereitstellt. Dadurch ist es möglich, für verschiedene Typen von Elektromotoren identische Steuereinheiten zu verwenden, während die Auswerteeinheit in einfacher Weise ersetzt werden kann. Weiterhin kann die Auswerteeinheit unmittelbar am Elektromotor angeordnet werden, so dass die Signalleitungen zwischen Elektromotor und insbesondere einem darin angeordneten Sensor und Auswerteeinheit möglichst kurz vorgesehen werden können. Dadurch wird die Störanfälligkeit der Signalübertragung reduziert.

Weiterhin kann die Steuereinheit der Auswerteeinheit ein Nutzsignal bereitstellen, wobei die Auswerteeinheit ausgebildet ist, um mit Hilfe des Nutzsignals die motorrelevante Größe zu erfassen.

Gemäß einer Ausführungsform ist die Auswerteeinheit ausgebildet, die motorrelevante Größe als analoges Signal zu erfassen, das analoge Signal zu digitalisieren, um die Motorinformation zu erhalten und die digitalisierte Motorinformation der Steuereinheit bereitzustellen.

Die Auswerteeinheit kann ausgebildet sein, um die Motorinformation auf ein von der Steuereinheit bereitgestelltes Nutzsignal zu modulieren, wobei die Steuereinheit ausgebildet ist, um die Motorinformation durch Demodulieren zu ermitteln.

Die Auswerteeinheit kann ausgebildet sein, um einen im Elektromotor vorgesehenen Sensor so anzusteuern, dass eine Sensorgröße in die Auswerteeinheit ausgelesen wird.

Gemäß einer Ausführungsform ist die Auswerteeinheit im Elektromotor integriert angeordnet. Weiterhin kann die Auswerteeinheit gemeinsam mit einem Sensor in dem Elektromotor ausgebildet sein.

### Kurzbeschreibung der Zeichnungen

Bevorzugte Ausführungsformen der Erfindung werden nachfolgend anhand der beigefügten Zeichnungen näher erläutert. Es zeigen:
Fig. 1: eine schematische Darstellung eines Motorsystems gemäß einer Ausführungsform;
Fig. 2: eine schematische Darstellung eines Motorsystems gemäß einer weiteren Ausführungsform;
Fig. 3: eine schematische Darstellung eines Motorsystems gemäß einer weiteren Ausführungsform; und
Fig. 4: eine schematische Darstellung eines Motorsystems mit einem Gleichstrommotor und einer in dem Gleichstrommotor angeordneten Auswerteeinheit.

In der Beschreibung der nachfolgenden Ausführungsformen bezeichnen gleiche Bezugszeichen Elemente gleicher oder vergleichbarer Funktion.

Beschreibung von Ausführungsformen.

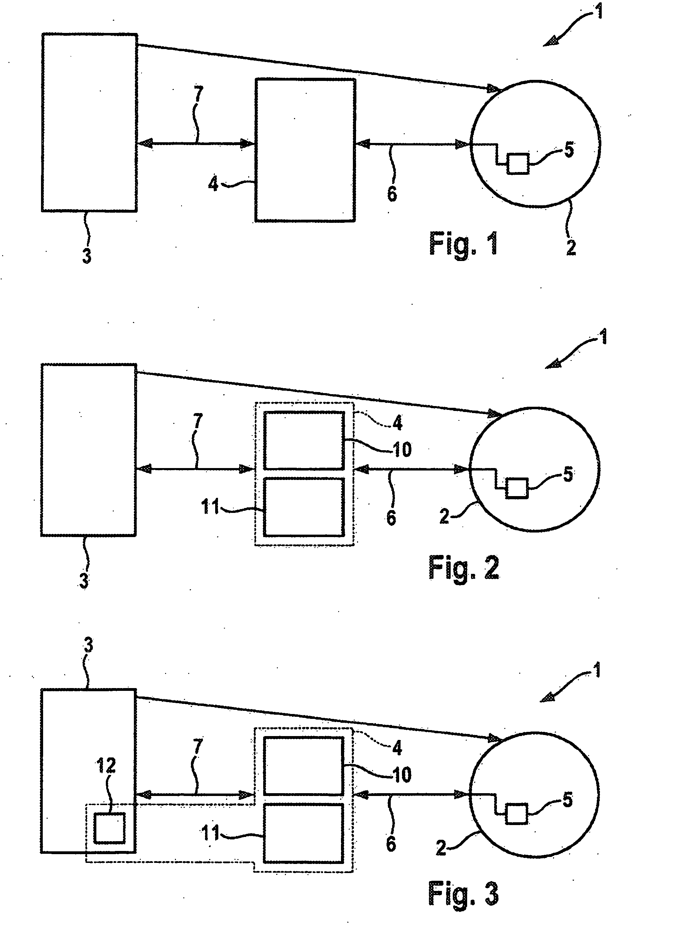

In Fig. 1 ist ein Motorsystem 1 dargestellt mit einem Elektromotor 2 und einer Steuereinheit 3, über die der Elektromotor 2 angesteuert wird.

Der Elektromotor 2 kann bspw. als Synchronmotor, Asynchronmotor, bürstenloser Motor oder Gleichstrommotor ausgebildet sein. Die Steuereinheit 3 stellt die zur Ansteuerung des Elektromotors 2 notwendige Ansteuerung zur Verfügung, z.B.in Form einer Gleichspannung, in Form von Pulsweiten modulierten Signalen oder dergleichen.

In dem Elektromotor 2 ist ein Sensor zur Erfassung betriebsrelevanter Größen vorgesehen. Der Sensor 5 stellt eine Sensorgröße zur Verfügung, die einem Drehmoment, einer Drehzahl, einer Beschleunigung oder einer anderen für den Betrieb des Elektromotors 2 relevanten Größe entsprechen kann.

Weiterhin ist eine Auswerteeinheit 4 vorgesehen, die mit dem in dem Elektromotor 2 vorgesehenen Sensor 5 gekoppelt ist, um mit diesem in geeigneter Weise über die Signalverbindung 6 zu kommunizieren. Ferner ist die Auswerteeinheit 4 über eine entsprechende weitere Signalverbindung 7 mit der Steuereinheit 3 verbunden. Über die Signalverbindung 6 kann die Auswerteeinheit 4 eigenständig oder mit Unterstützung der über die weitere Datenverbindung 7 verbundenen Steuereinheit 3 Informationen über den Status des Elektromotors 2, zum Beispiel eine Angabe über die Position, Drehmoment oder Drehzahl des Elektromotors 2 ermitteln. Die Auswerteeinheit 4 kann die entsprechenden, vom Elektromotor 2 empfangenen Angaben oder Angaben über die Sensorwerte des Sensors 5 des Elektromotors selbständig verarbeiten und in einer geeigneten Form über die weitere Signalverbindung 7 an die Steuereinheit 3 weitergeben.

Die Informationsübertragung über die Signalverbindungen 6 und 7 kann mithilfe beliebiger analoger, elektrischer Größen, wie bspw. Strom, Spannung bzw. Frequenz oder digital mit Hilfe einer Codierung durchgeführt werden. Die Auswerteeinheit 4 kann ein Mess- oder Prüfsignal über die Signalverbindung 6 an den Elektromotor 2 ausgeben, um ein Auslesen des Sensors 5 vorzunehmen bzw. zu unterstützen. Die Auswerteeinheit 4 kann das Mess- bzw. Prüfsignal selbsttätig erzeugen. Alternativ kann das Mess- bzw. Prüfsignal gesteuert durch die Steuereinheit 3 generiert werden.

Die über die weitere Signalverbindung 7 übertragene Information kann sowohl interpretiert als auch uninterpretiert sein. Die Signalübertragung kann analog bspw. mithilfe einer elektrischen Größe, wie z.B. Spannung, Strom, Frequenz und dgl., vorgenommen werden, wobei die elektrische Größe in einem definierten Verhältnis zu einer Information über den Status des Elektromotors 2, wie z.B. einer Information über einen Sensorwerte, steht.

Bei dem Motorsystem der Fig. 1 sind die Steuereinheit 3, die Auswerteeinheit 4 und der Elektromotor 2 separat ausgeführt. Insbesondere die Auswerteeinheit 4 ist an den Motortyp bzw. an den Typ des in dem Elektromotor 2 verwendeten Sensors 5 angepasst, während die Steuereinheit 3 bspw. ein standardisierter Mikrocontroller sein kann. Bei Wechsel des Motortyps ist es somit möglich, das Motorsystem 1 lediglich durch Austausch der Auswerteeinheit 4 an den geänderten Motortyp anzupassen.

In Fig. 2 ist dargestellt, dass die Auswerteeinheit 4 mehrere Untereinheiten 10, 11 aufweisen kann, die jeweils entweder gemeinsam in einem Chip oder in mehreren Chips oder integrierten Baugruppen realisiert sein können. Die einzelnen Untereinheiten 10, 11, können verschiedene Funktionen, wie z.B. das Auslesen oder Abfragen des Sensors 5 in dem Elektromotor 2 und/oder die Weiterverarbeitung der von dem Sensor 5 empfangenen Sensorsignale, wie z.B. deren Codierung bzw. Digitalisierung und/oder die Generierung von geeigneten, für den Betrieb und/oder die Versorgung des Sensors 5 notwendigen Mess- bzw. Prüfsignale und weitere Funktionen wahrnehmen. Eine solche Untereinheit 10, 11 der Auswerteeinheit 4 kann bspw. auch durch diskrete Bauelemente realisiert sein oder auch als Leiterbahnstrukturen, die mit einer komplexen elektrischen Eigenschaft, wie z.B. einer Induktivität, wirken.

In Fig. 3 ist eine weitere Ausführungsform dargestellt, bei der die Auswerteeinheit 4 sowohl als separates Bauelement mit der einen oder den mehreren Untereinheiten 10, 11 ausgebildet ist, wobei ein Teil der oben genannten Funktionen der Auswerteeinheit 4 jedoch in einer weiteren Untereinheit 12 in der Steuereinheit 3 wahrgenommen wird. Das heißt, die Steuereinheit 4 ist bei dem in Fig. 3 gezeigten Motorsystem teilweise in der Steuereinheit 3 realisiert. Die Auswerteeinheit 4 kann auch teilweise oder vollständig in einem weiteren (nicht gezeigten) Bauelement integriert sein, das z.B. weitere Funktionen, die nicht für den Betrieb des Elektromotors 2 notwendig sind, wahrnimmt.

Da die aufzubereitenden, in der Regel analogen Sensorsignale häufig über größere Entfernung (einige Zentimeter bis Meter) zur Auswerteeinheit 4 transportiert werden müssen, kann das in der Auswerteeinheit 4 zur Verfügung stehende Sensorsignal durch Störeinkopplungen und dergleichen verfälscht werden oder aufgrund von Dämpfung schwer zu interpretieren sein. Entsprechend aufwendig ist die Signalaufbereitung in der Auswerteeinheit 4 zu realisieren. Auch die Qualität der so erhaltenen Informationen ist dadurch oft eingeschränkt.

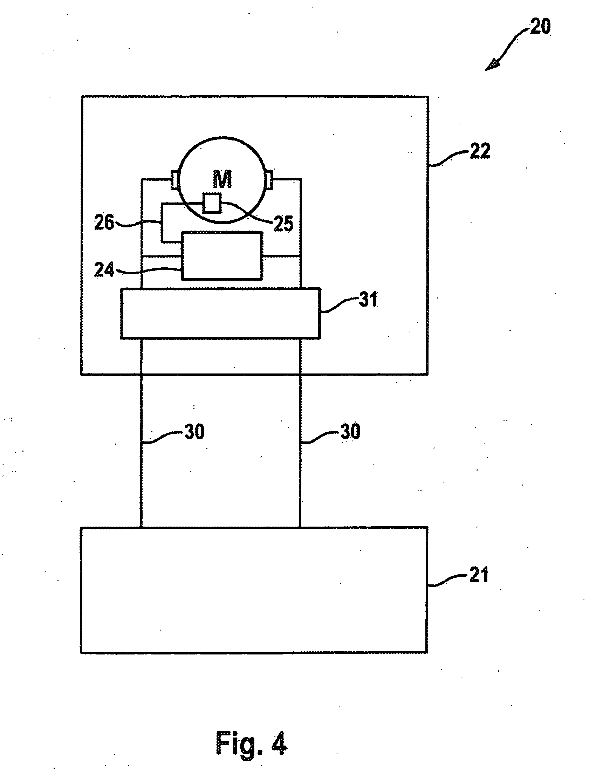

In Fig. 4 ist ein Motorsystem 20 mit einem Elektromotor 22 und einer Steuereinheit 21 gezeigt. Der Elektromotor 22 weist eine Auswerteeinheit 24 auf, die direkt innerhalb des Elektromotors 22 vorgesehen ist. Dadurch kann eine Signalverbindung 26 zwischen einem Sensor 25 zur Erfassung betriebsrelevanter Größen des Elektromotors und der Auswerteeinheit 24 möglichst gering gehalten werden.

Die Auswerteeinheit 24 kann neben der eigentlichen Erfassung und Auswertung von Sensorinformationen z.B. zur Ermittlung einer Drehzahl, Position, Temperatur usw. auch andere Informationen, die Angaben über den Typ des Elektromotors 22 selbst, wie z.B. Informationen über Betriebszeit, Identifizierungsinformationen, Typ, Baujahr und dgl., enthalten. Diese Informationen können in einem geeigneten Speicher in der Auswerteeinheit 24 vorgesehen werden.

Die Auswerteeinheit 24 ist dabei mit den Zuleitungen 30 des Elektromotors 22 gekoppelt. Während über die Zuleitungen 30 entsprechende Ansteuersignale zum Antreiben des Elektromotors 22 von der Steuereinheit 21 bereitgestellt werden, kann weiterhin die für den Betrieb der in dem Elektromotor 22 integrierten Auswerteeinheit 24 notwendige Energie über ein überlagerndes Nutzsignal bereitgestellt werden, das ebenfalls in der Steuereinheit 21 erzeugt wird. Dadurch können separate Signalleitungen zwischen der Steuereinheit 21 und der Auswerteeinheit 24 in dem Elektromotor 22 vermieden werden.

Weiterhin können die aus dem Elektromotor 22 an die Steuereinheit 21 zu übermittelnden Informationen mithilfe geeigneter Modulationsverfahren, wie bspw. Powerline-Kommunikation, Amplitudenmodulation, Frequenzmodulation, Phasenmodulation, übertragen werden. Dabei wird dem Ansteuersignal auf den Zuleitungen 30 ein Nutzsignal einer bestimmten Trägerfrequenz überlagert.

Der Elektromotor 22 kann weiterhin einen Filter 31 umfassen, der zum Filtern von Störeinflüssen auf den Zuleitungen 30 des Elektromotors 22 vorgesehen ist und häufig in Form eines Kondensators realisiert wird. Die Trägerfrequenz bei einem modulierten Nutzsignal zum Betreiben der Auswerteeinheit 4 wird dabei so gewählt, dass es den Filter 31 ohne nennenswerte Dämpfung passieren kann. Die Trägerfrequenz des Nutzsignals, das die Auswerteeinheit 24 mit Energie versorgt, ist so gewählt, dass der Elektromotor 22 in seiner eigentlichen Funktion nicht beeinflusst wird. So kann der Filter 31 weiterhin ausgebildet sein, um die eingespeiste Frequenz zum Betreiben der Auswerteeinheit 24 herauszufiltern und die ausgefilterte Energie für die Versorgung der Auswerteeinheit 24 mit elektrischer Energie zur verwenden.

Die Auswerteeinheit 24 kann auf beweglichen (z.B. einem Rotor) oder feststehenden (z.B. einem Stator) Teilen des Elektromotors 2 montiert werden. Bei Anbringen der Auswerteeinheit 4 auf beweglichen Teilen muss eine geeignete Versorgung der Auswerteeinheit 4 und eine Signalübertragung von der Auswerteeinheit aus dem Elektromotor 2 gewährleistet sein, z.B. über einen Kommutator und dergleichen.

Es ist weiterhin möglich, die Auswerteeinheit 4 in den Filter 15 zu integrieren.

Die Auswerteeinheit 4 kann grundsätzlich diskret oder in einem beliebig hohen Grad integriert ausgebildet werden.

Informationen können von der Auswerteeinheit 4 zur Steuereinheit 3 übertragen werden, indem das Nutzsignal auf eine der oben beschriebenen Arten moduliert wird. Die Steuereinheit 3 demoduliert dann das entsprechende auf der Signalverbindung 7 resultierende Signal, um die entsprechende Information von der Auswerteeinheit 4 auszuwerten.

In den zuvor beschriebenen Motorsystemen werden Elektromotoren 2 mit separatem Sensor 5 verwendet. Alternativ können auch sensorlose Elektromotoren verwendet werden, wobei die Auswerteeinheit 4 einzelne in dem Elektromotor vorliegende elektrische Zustände erfasst und diese in geeigneter Weise auswertet, z.B., um eine Drehzahl oder einen absoluten Drehwinkel zu ermitteln.

## Patentansprüche

1. Motorsystem (1), umfassend:
- einen Elektromotor (2);
- eine Auswerteeinheit (4), die mit dem Elektromotor (2) gekoppelt ist, um motorrelevante Größen zu erfassen und um abhängig von den motorrelevanten Größen eine Motorinformation bereitzustellen;
- eine Steuereinheit (3), die mit der Auswerteeinheit verbunden ist, um die
Motorinformation zu erhalten;
wobei die Auswerteeinheit (4) von der Steuereinheit (3) separat ausgeführt ist, **dadurch gekennzeichnet, dass** die Auswerteeinheit (4) ausgebildet ist, um die Motorinformation auf ein von der Steuereinheit (3) bereitgestelltes Nutzsignal zu modulieren, wobei die Steuereinheit (3) ausgebildet ist, um die Motorinformation durch Demodulieren zu ermitteln.

2. Motorsystem (1) nach Anspruch 1, **dadurch gekennzeichnet, dass** die Steuereinheit (3) der Auswerteeinheit (4) ein Nutzsignal bereitsteltt, wobei die Auswerteeinheit (4) ausgebildet ist, um mithilfe des Nutzsignals die motorrelevante Größe zu erfassen.

3. Motorsystem (1) nach Anspruch 1 oder 2, **dadurch gekennzeichnet, dass** die Auswerteeinheit (4) ausgebildet ist, die motorrelevante Größe als analoges Signal zu erfassen, das analoge Signal zu digitalisieren, um die Motorinformation zu erhalten und die digitalisierte Motorinformation der Steuereinheit (3) bereitzustellen.

4. Motorsystem (1) nach einem der Ansprüche 1 bis 3. **dadurch gekennzeichnet, dass** die Auswerteeinheit (4) ausgebildet ist, um einen im Elektromotor (2) vorgesehenen Sensor (5) so anzusteuern, dass eine Sensorgröße in die Auswerteeinheit (4) ausgelesen wird.

5. Motorsystem (1) nach einem der Ansprüche 1 bis 4, **dadurch gekennzeichnet, dass** die Auswerteeinheit (4) im Elektromotor (2) integriert ist

6. Motorsystem (1) nach einem der Ansprüche 1 bis 5. **dadurch gekennzeichnet, dass** die Auswerteeinheit (4) gemeinsam mit einem Sensor (5) in dem Elektromotor (2) ausgebildet ist.

## Claims

1. Motor system (1) comprising:
- an electric motor (2);
- an evaluation unit (4), which is coupled to the electric motor (2), in order to detect motor-relevant variables and in order to provide motor information as a function of the motor-relevant variables;
- a control unit (3) which is connected to the evaluation unit in order to obtain the motor information;
with the evaluation unit (4) being formed separately from the control unit (3), **characterized in that** the evaluation unit (4) is designed to modulate the motor information onto a useful signal which is provided by the control unit (3), with the control unit (3) being designed to ascertain the motor information by demodulation.

2. Motor system (1) according to Claim 1, **characterized in that** the control unit (3) provides a useful signal to the evaluation unit (4), with the evaluation unit (4) being designed to detect the motor-relevant variable with the aid of the useful signal.

3. Motor system (1) according to Claim 1 or 2, **characterized in that** the evaluation unit (4) is designed to detect the motor-relevant variable as an analog signal, to digitize the analog signal in order to obtain the motor information, and to provide the digitized motor information to the control unit (3).

4. Motor system (1) according to one of Claims 1 to 3, **characterized in that** the evaluation unit (4) is designed to actuate a sensor (5) which is provided in the electric motor (2) such that a sensor variable is read into the evaluation unit (4).

5. Motor system (1) according to one of Claims 1 to 4, **characterized in that** the evaluation unit (4) is integrated in the electric motor (2).

6. Motor system (1) according to one of Claims 1 to 5, **characterized in that** the evaluation unit (4) is formed in the electric motor (2) together with a sensor (5).

## Revendications

1. Système à moteur (1) comprenant :
- un moteur électrique (2) ;
- une unité d'interprétation (4) qui est connectée au moteur électrique (2) pour acquérir des grandeurs concernant le moteur et pour délivrer une information de moteur en fonction des grandeurs concernant le moteur ;
- une unité de commande (3) qui est reliée avec l'unité d'interprétation pour obtenir l'information de moteur ;
l'unité d'interprétation (4) étant réalisée séparément de l'unité de commande (3), **caractérisé en ce que** l'unité d'interprétation (4) est configurée pour moduler l'information de moteur sur un signal utile délivré par l'unité de commande (3), l'unité de commande (3) étant configurée pour déterminer l'information de moteur par démodulation.

2. Système à moteur (1) selon la revendication 1, **caractérisé en ce que** l'unité de commande (3) délivre à l'unité d'interprétation (4) un signal utile, l'unité d'interprétation (4) étant configurée pour acquérir la grandeur concernant le moteur à l'aide du signal utile.

3. Système à moteur (1) selon la revendication 1 ou 2, **caractérisé en ce que** l'unité d'interprétation (4) est configurée pour acquérir la grandeur concernant le moteur sous la forme d'un signal analogique, pour numériser le signal analogique afin d'obtenir l'information de moteur et pour délivrer l'information de moteur numérisée à l'unité de commande (3).

4. Système à moteur (1) selon l'une des revendications 1 à 3, **caractérisé en ce que** l'unité d'interprétation (4) est configurée pour commander un détecteur (5) prévu dans le moteur électrique (2) de telle sorte qu'une grandeur détectée est lue dans l'unité d'interprétation (4).

5. Système à moteur (1) selon l'une des revendications 1 à 4, **caractérisé en ce que** l'unité d'interprétation (4) est intégrée dans le moteur électrique (2).

6. Système à moteur (1) selon l'une des revendications 1 à 5, **caractérisé en ce que** l'unité d'interprétation (4) est réalisée conjointement avec un détecteur (5) dans le moteur électrique (2).
